# EUROPEAN PATENT APPLICATION

(11) **EP 4 773 054 A1**
(43) Date of publication of application: **08.07.2026**
(21) Application number: 25156243.5
(22) Date of filing: 06.02.2025
(51) Int. Cl.: G06Q 10/0635, G06Q 50/04

(54) **METHOD FOR ENHANCING EHS-COMPLIANCE OF THE OPERATION OF AN INDUSTRIAL SITE AND MANAGEMENT SYSTEM**

(30) Priority: 03.01.2025 EP 25150218
(71) Applicant: Siemens Aktiengesellschaft, 80333 München (DE)
(72) Inventor: Nickles, Jochen, 90763 Fürth (DE); Sauer, Markus, 81739 München (DE)
(74) Representative: Siemens Patent Attorneys

(57) **Abstract**

In the method for enhancing EHS-Compliance of the operation of an industrial site (IS) comprising one or more industrial machines (PM, MM), order and/or supply management information (PLI, O, M, P) of the industrial site (IS) is considered and a digital representation (EHSDT) of at least the one or more industrial machines (PM, MM) is used that takes the order and/or supply management information (PLI, O, M, P) as an input and that provides EHS-relevant information about one or more probable EHS-relevant events as an output and the EHS-relevant information (EHSRI) is considered and used for modifying the operation of machines (PM, MM) of the industrial site (IS).

## Description

The invention relates to a method for enhancing EHS-compliance of the operation of an industrial site and to a management system of an industrial site.

In industrial environments, maintaining high standards of environmental, health, and safety (EHS) is critical. Traditional methods of monitoring and managing EHS parameters often primarily involve manual processes and periodic checks, which can be inefficient and prone to human error. Necessary updates often only happen with significant delay or not at all. There is a need for a more integrated, real-time solution that can provide continuous monitoring, predictive insights, and continous measure improvements to prevent incidents and ensure compliance with regulatory standards. This would also significantly reduce potentially associated monetary and reputation cost.

This invention relates to the field of digital twins, specifically designed for Environmental, Health, and Safety (EHS) applications. It leverages real-time data, human augmentation & annotation of system programs & designs, work planning, and predictive analytics to enhance safety protocols, environmental monitoring, and health management in industrial settings. It allows for real-time EHS assistance for the workforce on the industrial size. In addition, it supports the EHS managers and the industrial site managers, to automatically generate necessary documentation, and to observe and assess the current status as well as the efficiency (through a report on the accidents that were prevented by the system) of EHS at the industrial asset.

Thus, it is the aim of the current invention to provide an improved method for enhancing EHS-Compliance of the operation of an industrial site comprising one or more industrial machines. Furthermore, it is the aim of the present invention to provide a management system of an industrial site comprising one or more industrial machines, that enables such a method.

These aims of the present invention are addressed with a method for enhancing EHS-Compliance of the operation of an industrial site comprising one or more industrial machines with the features listed in claim 1 and with a management system with the features listed in claim 12.

The method according to the invention enhances the EHS-compliance of an industrial site by considering order and/or supply management information and using a digital representation of the industrial machines. The method provides EHS-relevant information about probable events and modifies the operation of the machines based on the EHS-relevant information.

Advantageously, the method according to the invention ensures that the operation of the industrial site complies with EHS regulations by using real-time order and supply management information.

Preferably, the digital representation is realized using a computer running a computer program and/or a neural network. In other words, the digital representation may be given by a representation in and/or running on a computer.

In a preferable aspect of the invention, the method utilizes a neural network in the digital representation that is trained with input data from order and/or supply management information. The neural network outputs EHS-relevant information.

In a preferable aspect of the method according to the invention, the digital representation is equipped with EHS-relevant information by augmenting the industrial site, particularly during engineering and/or developing the industrial site, especially the one or more industrial machines of the industrial site and/or a machine program and/or a configuration and/or a control of one or more or all of the one or more machines of the industrial site.

In one advantageous aspect of the invention, the digital representation is equipped with EHS-relevant information during carrying out the method, i. e. equipping the digital representation is part of the method according to the invention.

In an alternative and also advantageous aspect of the invention, equipping the digital representation is not part of the method according to the invention. In this particular aspect, the digital representation has been equipped with EHS-relevant information previously and, in the method according to the invention, is simply used.

In a particularly advantageous aspect of the invention, the digital representation is a neural network, that is trained with input data from order and/or supply management information and output data in the form of EHS-relevant information provided by augmenting the industrial site, particularly during engineering and/or developing the industrial site, especially the one or more industrial machines of the industrial site and/or a machine program and/or a configuration and/or a control of one or more or all of the one or more machines of the industrial site.

The neural network advantageously improves the accuracy and efficiency of predicting EHS-relevant events by learning from the input data.

In a preferable aspect of the invention, the method employs a digital twin of the industrial machines in the digital representation. In other words, the digital representation comprises a digital twin.

The digital twin advantageously provides a realistic and dynamic representation of the machines, allowing for better analysis and prediction of EHS-relevant events.

In a preferable aspect of the invention, the method applies to mobile machines, such as automobile machines, among the industrial machines.

In this aspect, the method can advantageously be used to enhance the EHS-compliance of a wide range of industrial machines, including mobile ones, that have a specifically important impact on EHS compliance.

In a preferable aspect of the invention, the method receives order and/or supply management information through the infrastructure of the industrial site, integrated with the site's housing or building. This includes monitoring means integrated with the infrastructure, such as water supply, water disposal, and IT infrastructure.

By utilizing the existing infrastructure, the method can advantageously gather accurate and real-time order and supply management information for enhanced EHS-compliance.

In a preferable aspect of the invention, the method uses the EHS-relevant information to reconfigure the operation of the industrial site, reducing the occurrence of probable EHS-relevant events.

In this aspect, the method advantageously optimizes the operation of the industrial site to minimize EHS risks, ensuring a safer working environment.

In a preferable aspect of the invention, the method modifies the operation of the machines by signaling the EHS-relevant information to the users, workers, or applications controlling the machines.

In this aspect, the method advantageously provides real-time notifications to relevant personnel, allowing them to take immediate actions to mitigate risks and prevent incidents.

In a preferable aspect of the invention, the method equips people working at the industrial site with assisting information derived from the EHS-relevant information, such as guiding information.

In this aspect, the method advantageously enhances human safety by providing workers with real-time guidance and information to avoid dangerous situations.

In a preferable aspect of the invention, the EHS-compliance includes ecology compliance, and the EHS-relevant information comprises ecologically relevant information and events.

In this aspect, the method advantageously ensures compliance with ecological regulations by providing real-time information and insights into ecologically relevant events.

In a preferable aspect of the invention, the EHS-compliance includes health compliance, and the EHS-relevant information comprises health relevant information and events.

In this aspect, the method advantageously prioritizes the health and well-being of individuals by providing real-time information and insights into health relevant events.

In a preferable aspect of the invention, the EHS-compliance includes safety compliance, and the EHS-relevant information comprises safety relevant information and events.

In this aspect, the method advantageously enhances safety protocols by providing real-time information and insights into safety relevant events.

The management system of an industrial site according to the invention includes means for receiving order and/or supply management information and a digital representation of the industrial machines. It also includes modification devices for modifying the operation of the machines. Modifying the operation of the machines is preferably performed dependent on EHS-relevant information, that is derived with the digital representation of the industrial machines, preferably of the industrial site, with the order and/or supply management information as input data. The management system thus advantageously integrates the necessary components for implementing the method according to the invention, enabling efficient EHS-compliance management.

In a preferable aspect of the invention, the modification device in the management system includes a signaling device for signaling EHS-relevant information.

In this aspect, the modification device advantageously ensures that relevant personnel are promptly informed about EHS-relevant events, enabling quick response and preventive actions.

In a preferable aspect of the invention, the modification device in the management system includes a control device implementing control rules based on EHS-relevant information to control the operation of the industrial site.

In this aspect, the modification device advantageously automates the control of the industrial site's operation based on real-time EHS-relevant information, ensuring efficient and EHS-compliant operation.

In the following, the method according to the invention and the management system according to the invention are described in more details with the help of the attached drawing.
- Fig. 1: shows an industrial site with an embodiment of the management system according to the invention in a schematical diagram.
- Fig. 2: shows an embodiment of the method according to the invention that is carried out with the embodiment of the management system according to the invention according to Fig. 1.

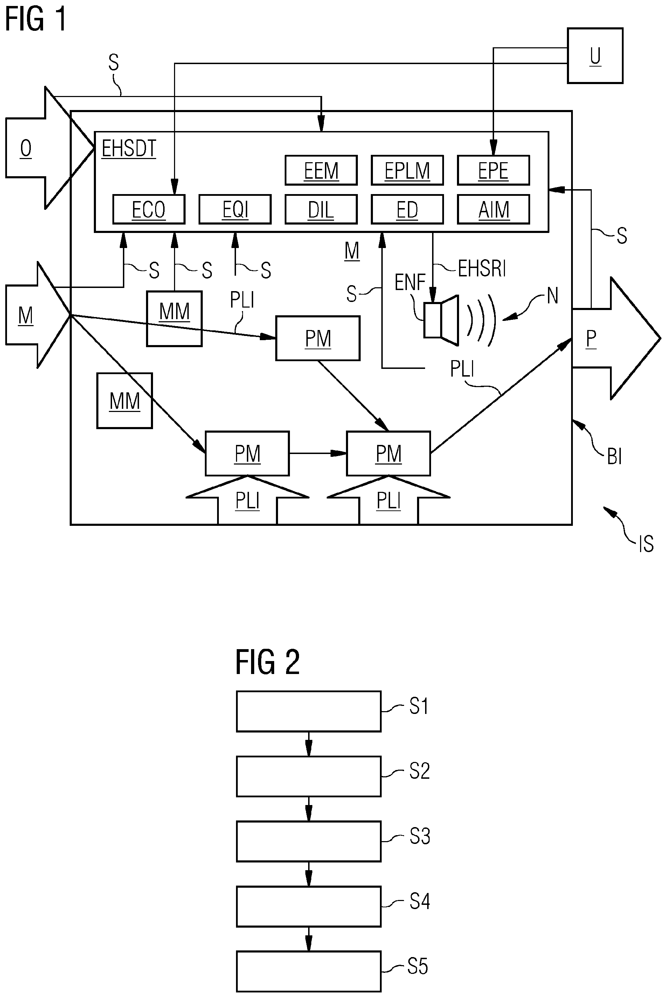

The system depicted in Fig. 1 is part of an industrial site IS that represents a manufacturing site and comprises multiple industrial machines PM in the form of manufacturing machines PM. The system depicted in Fig. 1 realizes an EHS digital twin EHSDT. The EHS digital twin EHSDT is realized as a part of an overall control system (not explicitly detailed) of the industrial site IS. The system comprises the following components:
1. Business IT systems BIT: The business IT system BIT provides the necessary planning and live information PLI like order processing schedules, material flows, etc. to model the future operations and behavior of the industrial asset. The business IT system BIT provides in particular information about the raw material M fed initially into the manufacturing process. Additionally, the business IT system BIT provides information about orders O for products P. The business IT system BIT also provides information about readily manufactured products P that leave the industrial site IS. The information about the raw material M, about the orders O and the manufactured products P are specific parts of the planning and live information PLI. The planning and live information PLI includes additionally the material flow between the industrial machines PM. The interface of the business IT system BIT to the EHS digital twin EHSDT allows to provide the planning and live information PLI to the EHS digital twin EHSDT, so that the EHS digital twin EHSDT is able to predict the future EHS state with the planning and live information PLI that may also be regarded as an order and supply management information, as input parameters determining the operational behavior of the industrial machines PM and logistic equipment like movable machines MM, that are constituted by AMRs, and AGVS in the depicted example.

Some moving machines MM provide additional material flow data about material, that is transported by them. The business IT system BIT provides these planning and live information PLI via signal connections S to the EHS digital twin EHSDT.

The EHS digital twin EHSDT processes the order and supply management information together with planning ERP information and information provided by the manufacturing execution system MES and other business systems. It ensures seamless data flow and operational alignment with safety protocols, health, environment, and sustainability plans.
2. Factory Floor
   a. Machines (PM): Machines like for instance production machines, represent all system running the industrial process on-site. Depending on their operation status and the processing of a machine program PMP and the corresponding materials and supplies, they are typical the key drivers for EHS effects and hazards. The processing causes for instance moving equipment, temperature, noise, and / or light effects, which introduce potential hazards to humans operating on-site. In addition, it does not only influence the safety aspect, put also health and environmental effects.
   b. Machine Programs (PMP): The machine program PMP runs on the machine PM and provides the instructions for the machines PM for processing goods and supplies and how to interact with other machines PM and humans. For the system as proposed in this invention we propose to annotate the instructions of the machine programs PMP with EHS impact information as described in the example before. This enables the digital twin DT to predict the EHS state of the industrial asset in combination with processing data, business IT system BIT data, and all the other resources.
   c. Moving machines (MM): This is a specific class of machines PMs also running a machine program PMP. Moving machines MMs move inside an industrial asset and do not have a fixed location. Thus, they have a specific effect on the EHS state of the industrial asset, as the movement of this equipment has a specific risk regarding safety. In addition, moving machines MMs have an additional degree of freedom regarding EHS operations, as their position can be controlled, e.g. they can avoid regions with humans. A typical example for moving machines MMs are AGVs / AMRs handling the material flow logistics in and industrial asset.
   d. Infrastructure and Building (BI): Typically, this provides the housing of the industrial process operations. It provides the infrastructure for power supply, water supply, IT, and waste disposal. It addition, it has infrastructure to control the environmental conditions, considers emergency paths, etc.. It also provides the structure and support to integrate further equipment for instance to monitor EHS parameters or provide EHS alarming mechanisms.
   e. Humans : Major parts of the EHS measures target the human working on-site at an industrial asset. The EHS Digital Twin EHSDT supports the human with the EHS engineering module EEM and EHS companion ECO to make best use of the available integrated data sources along the general and personal EHS requirements.
3. EHS Digital Twin EHSDT
   a. Data Integration Layer (DIL): Aggregates data from various sources to provide a comprehensive view of the industrial environment. It takes care about providing standardized interface, unifying the information, extracting the EHS relevant data.
   b. EHS Digital Model (EDM): Represents the physical and operational aspects of the factory in a digital format for analysis and simulation.
   c. Analytics and ML / Al Module (AIM): Utilizes machine learning and Al to predict and prevent safety incidents by analyzing patterns and trends with support of the data integration layer DIL and the EHS digital model EDM.
   d. EHS Query Interface (EQI): Allows users U to query the digital twin for specific safety-related information and insights.
   e. EHS Notification Module (ENF): Sends alerts and notifications to relevant personnel about potential safety issues and required actions. Users U and applications can subscribe to specific events according to individually defined rules.
   f. EHS Rule, Policy Engine (EPE): Users U can create specific "if situation x, then perform action y" rules with the EHS engineering module EEM and EHS companion ECO which support the execution of specific EHS measures. The EHS rule/policy engine EPE manages this rules and monitors if any of the entry conditions of a rule or policy is triggered.
   g. EHS Production Process update proposal Module (EPLM): Proposes updates to the production process systems based on safety data and analysis to mitigate EHS risks and optimize potential environmental and health impacts.
4. EHS Applications
   a. EHS Engineering Module (EEM): Supports the digital design and implementation of safety, health, and environment measures and systems for industrial asset operation. This includes the engineering of analysis, monitoring & alarming settings, data aggregations & visualization, and policies and rules to be implemented.
   b. EHS Companion (ECO): Provides real-time assistance and guidance to workers and all other persons on site on safety practices and protocols. The user U will be able to configure its personal preferences, polices, and notifications. It can be realized with a multitude of user U interface e.g. on personal mobile device, additional wearable, integrated in headsets, attached to machines, attached to building infrastructure or any combination of user U interacting systems.

The basic exemplary workflow of the proposed EHS Digital Twin EHSDT is as follows:
A. EHS Digital Twin EHSDT Management
   a. The machine programs PMP of machines PMs and moving machines MMs are annotated with potential EHS effects and impacts during development of the programs, the engineering and the application of the machines PMs and moving machines MMs into the industrial site IS.
   b. Static and dynamic infrastructure and building BI data is continuously made available in a first step S1 (s. Fig. 2) in order to provide this information to the EHS Digital Twin EHSDT system.
   c. BIT provides data and information regarding current and future schedules of process operation and the relation to machines PMs and moving machines MMs.
   d. The stored and dynamic data of all machines PMs, moving machines MMs, infrastructure and building BI, and business IT system BIT is aggregated in the data integration layer DIL in a second step S2.
   e. Based on the data available in the data integration layer DIL the EHS digital model EDM maintains an overall digital model of the industrial sites IS EHS situation. The business IT system BIT data in combination with the machine programs PMP are input data for the EHS digital model EDM the model to predict also future states of the EHS situation. The business IT system BIT data together with the machine programps PMP are provided as input data to the EHS digital model EDM in a third step S3.
   f. The EHS digital model EDM runs continuously and is updated continuously based on new updates of the different data sources and operational data.
B. EHS Digital Twin EHSDT Usage is
   a. The EHS Digital Twin EHSDT provides additional interfaces and features which build on the continuously updated EHS digital model EDM as data source.
   b. The EHS Digital Twin EHSDT provides EHS-relevant information EHSRI to an EHS notification module ENF which allows for push notification N and alarming in case a specific EHS scenario are detected. These notifications and alarms are provided in a fourth step S4. Users U e.g. use the EHS engineering module EEM to define such kind of notification scenarios for general purpose EHS incident management, but also the EHS companion ECO can be used to subscribe to specific events or define context specific personal rules and policies.
   c. The EHS rule/policy engine EPE manages all the available and defined rules and policies and monitors if any of the defined scenarios is happening and then triggers corresponding actions in a fifth step S5.
   d. In parallel the EHS Production Process update proposal Module EPLM together with the analytics and ML/Al module AIM analysis the overall relation between the process data and the EHS scenarios and can propose updates to the industrial process (e.g. delaying a specific process to reduce accumulated noise levels, or re-scheduling of logistic tasks, to avoid potential collisions between humans and AMR/AGVs)
   e. Another parallel process is the analytics and ML/Al module AIM analysis regarding EHS anomalies, or potential noncompliance with regulations, etc. based on Al.

The EHS Digital Twin EHSDT is an advanced system that creates a virtual replica of physical assets, processes, scheduling data, operational data, and environments within an industrial setting. It integrates data from various sources, devices, systems, services, and existing EHS management systems to provide a comprehensive, real-time and future view of EHS situation for specific areas in an industrial asset but also the overall asset.

It can be applied to realize a multitude of EHS applications targeting the various aspects of a cost-efficient, successful and sustainable EHS management for the operations of industrial and commercial assets like e.g.:
- Industrial Safety: Enhances workplace safety by identifying hazards and preventing accidents.
- Environmental Monitoring: Tracks emissions, waste, and other environmental parameters to ensure compliance based on real-time asset operation data.
- Health Management: Monitors health indicators to prevent occupational illnesses and manage health risks.
- Process adaptation: The system allows to holistically analyze the relation between physical process operation and EHS impact. Thus, it can also be applied to optimize the industrial process and operations according specific EHS risk for risk mitigation.
- Continuous EHS Compliance reports: The proposed system allows for continuous reporting and documentation of

The EHS can be implemented in various architectural styles both as central and as fully decentralized service or any hybrid version.

## Claims

1. Method for enhancing EHS-Compliance of the operation of an industrial site (IS) comprising one or more industrial machines (PM, MM), in which order and/or supply management information (PLI, O, M, P) of the industrial site (IS) is considered and a digital representation (EHSDT) of at least the one or more industrial machines (PM, MM) is used that takes the order and/or supply management information (PLI, O, M, P) as an input and that provides EHS-relevant information about one or more probable EHS-relevant events as an output and in which the EHS-relevant information (EHSRI) is considered and used for modifying the operation of machines (PM, MM) of the industrial site (IS).

2. Method according to the previous claims, wherein the digital representation (EHSDT) is equipped with a neural network, which is trained with input data constituted by order and/or supply management information for outputting EHS-relevant information (EHSRI).

3. Method according to one of the previous claims, wherein the digital representation (EHSDT) is equipped with EHS-relevant information by augmenting the industrial site (IS), particularly during engineering and/or developing the industrial site (IS), especially the one or more industrial machines (PM, MM) of the industrial site and/or a machine program (PMP) and/or a configuration and/or a control of one or more or all of the one or more machines (PM, MM) of the industrial site (IS).

4. Method according to one of the previous claims, wherein the digital representation (EHSDT) is equipped with a digital twin of the at least one or more machines (PM, MM).

5. Method according to one of the previous claims, wherein one or more of the industrial machines are mobile machines, particularly automobile machines.

6. Method according to one of the previous claims, wherein order and/or supply management information (PLI) is received using an infrastructure of the industrial site (IS), particularly an infrastructure integrated with a housing or building comprising the industrial site, especially a water supply and/or a water disposal and/or an IT infrastructure, particularly using one or more monitoring means integrated with the infrastructure.

7. Method according to one of the previous claims, wherein the EHS-relevant information (EHSRI) is used for reconfiguring the operation of the industrial site (IS) such, that operation of the industrial site (IS) reduces the occurrence of probable EHS-relevant events.

8. Method according to one of the previous claims, wherein the EHS-relevant information (EHSRI) is used for modifying the operation of machines (PM, MM) of the industrial site (IS) by signaling the EHS-relevant information (EHSRI) to a user (U) and/or a worker and/or one or more applications running on or controlling one or more machines (PM, MM).

9. Method according to one of the previous claims, wherein the EHS-relevant information (EHSRI) is used for modifying the operation of machines (PM, MM) such, that people working at the industrial site are equipped with assisting information, such as guiding information, derived from the EHS-relevant information.

10. Method according to one of the previous claims, wherein the EHS-Compliance is at least ecology compliance and wherein the EHS-relevant information (EHSRI) comprises at least ecologically relevant information and the EHS-relevant events comprise at least ecologically relevant events.

11. Method according to one of the previous claims, wherein the EHS-Compliance is at least health compliance and wherein the EHS-relevant information (EHSRI) comprises at least health relevant information and the one or more EHS-relevant events comprise at least health relevant events.

12. Method according to one of the previous claims, wherein the EHS-Compliance is at least safety compliance and wherein the EHS-relevant information (EHSRI) comprises at least safety relevant information and the one or more EHS-relevant events comprise at least safety relevant events.

13. Management system of an industrial site (IS) comprising one or more industrial machines (PM, MM), which is configured to carry out a method according to one of the previous claims, which comprises means of receiving order and/or supply management information (PLI) and which comprises a digital representation (EHSDT) of at least the one or more industrial machines (PM, MM) and which comprises modification devices for modifying the operation of machines of the industrial site.

14. Management system according to one of the previous claims, wherein the modification device comprises a signaling device that is configured to signal EHS-relevant information (EHSRI).

15. Management system according to one of the previous claims, wherein the modification device comprises a control device implementing control rules for controlling the operation of the industrial site and wherein the modification device (EPE) comprise a set of at least one rule, according to which the operation of machines of the industrial site depends on EHS-relevant information (EHSRI).
